# FASCICULE DE BREVET EUROPEEN

(11) **EP 3 558 895 B1**
(45) Date de publication et mention de la délivrance du brevet: **13.09.2023**
(21) Numéro de dépôt: 17837975.6
(22) Date de dépôt: 20.12.2017
(51) Int. Cl.: C04B 38/00, F01N 3/28, F01N 3/022, C04B 35/626, C04B 35/46

(54) **PRODUITS CÉRAMIQUES POREUX DE SOUS OXYDES DE TITANE**
PORÖSE KERAMIKPRODUKTE VON TITANSUBOXIDEN
POROUS CERAMIC PRODUCTS OF TITANIUM SUB-OXIDES

(30) Priorité: 20.12.2016 FR 1662930
(43) Date de publication de la demande: 30.10.2019
(73) Titulaire: SAINT-GOBAIN CENTRE DE RECHERCHES ET D'ETUDES EUROPEEN, 92400 Courbevoie (FR)
(72) Inventeur: RAFFY, Stéphane, 84300 Cavaillon (FR); AUBERT, Brice, 84250 le Thor (FR); URFFER, Daniel, 84450 Saint-Saturnin (FR); MARLIN, Samuel, 13750 Plan d'Orgon (FR)
(74) Mandataire: Saint-Gobain Recherche
(86) Numéro de dépôt international: PCT/FR2017/053745
(87) Numéro de publication internationale: WO 2018/115749

(56) Documents cités:
- US-A1- 2006 049 060
- US-A1- 2015 251 956
- GROSSO D ET AL: "Highly porous TiO2 anatase optical thin films with cubic mesostructure stabilized at 700 DEG C", CHEMISTRY OF MATERIALS, AMERICAN CHEMICAL SOCIETY, US, vol. 15, 24 octobre 2003 (2003-10-24), pages 4562-4570, XP002338637, ISSN: 0897-4756, DOI: 10.1021/CM031060H
- LI XIAOLEI ET AL: "Investigation of fabrication of Ti4O7by carbothermal reduction in argon atmosphere and vacuum", JOURNAL OF MATERIALS SCIENCE. MATERIALS IN ELECTRONICS, CHAPMAN AND HALL, LONDON, GB, vol. 27, no. 4, 18 December 2015 (2015-12-18), pages 3683-3692, XP035646101, ISSN: 0957-4522, DOI: 10.1007/S10854-015-4208-4 [retrieved on 2015-12-18]
- BERGER L-M ET AL: "Spray powders and coatings on the basis of titanium suboxides", PROCEEDINGS OF THE INTERNATIONAL THERMAL SPRAY CONFERENCE, XX, 28 May 2001 (2001-05-28), pages 291-300, XP008100320, [retrieved on 2001-05-28]

## Description

L'invention se rapporte à des produits céramiques poreux constitués majoritairement de sous oxydes de titane. Par sous oxydes de titane, on entend classiquement des oxydes de titane de formulation générale TiOₓ dans lesquels x est compris entre 1 et 2, bornes exclues, en particulier les phases dites de Magnéli. L'invention se rapporte également à un procédé de fabrication de tels produits céramiques poreux, et à leurs utilisations en particulier pour des dispositifs électrochimiques, notamment utiles pour le traitement des liquides, par exemple la purification de l'eau.

Il est bien entendu que de tels produits, par les avantages qu'ils procurent, sont susceptibles d'être utilisés avantageusement dans de nombreuses autres applications, notamment dans tout domaine pour lequel une porosité importante et/ou homogène et/ou monomodale est recherchée. On peut citer en particulier, mais sans s'y restreindre, les électrodes dans les systèmes électrochimiques, les supports conducteurs pour couches ou pour membranes ou pour phases actives dispersées ou pour le domaine de la catalyse, notamment pour l'oxydation des composés organiques volatiles.

Pour améliorer le traitement d'effluents chargés en polluants bioréfractaires (par exemple des antibiotiques, anti-inflammatoires,...) non éliminés par les méthodes conventionnelles, on envisage d'utiliser des systèmes membranaires qui doivent avoir deux fonctions : d'une part permettre la rétention des composés à traiter et d'autre part assurer leur dégradation par électrochimie. Le produit utilisé dans de tels systèmes membranaires doit donc présenter une porosité adaptée par rapport à la taille des particules polluantes et permettant de laisser passer l'effluent traité tout en le ralentissant, pour permettre de prolonger le contact des composés à dégrader avec la membrane, sans générer une trop grande perte de charge. Il doit également être électroactif c'est-à-dire permettre la dégradation (transformation du carbone organique des composés polluants en carbone minéral non-toxique) par électrochimie. Les produits poreux à base de sous-oxydes de titane, en particulier constitués par ou comprenant des matériaux à base de phase de magnéli Ti₄O₇, Ti₅O₉ ou encore Ti₆O₁₁ et tout particulièrement à base de Ti₄O₇ sont envisagés pour une telle application selon la présente invention.

Le brevet EP 047 595 B1 (ou son équivalent US 4,422,917) propose des matériaux constitués de sous-oxyde de type TiOₓ avec x compris entre 1,55 et 1,95, pour la réalisation d'électrodes. Les matériaux sont synthétisés à partir de poudre de TiO₂ en mélange avec un composé réducteur du type Ti, TiN, TiSi, C, TiO ou Ti₂O₃, à des températures comprises entre 1150 et 1450°C suivant la nature du composé réducteur.

La demande de brevet internationale WO2014/049288 concerne des grains fondus constitués essentiellement d'un mélange des phases de Magnéli Ti₅O₉ et Ti₆O₁₁. Elle décrit notamment un exemple comparatif fabriqué à partir d'un mélange de rutile et de 4% en poids de carbone black fritté à 1450°C sous argon pendant 2 heures et de formule générale TiO_{1,82}. Elle décrit un autre exemple comparatif fabriqué à partir d'un mélange d'anatase et de 1% en poids de carbone black fritté à 1450°C sous argon pendant 2 heures, qui présente une formule générale TiO_{1,79} et qui est constitué des phases Ti₄O₇ (25% du poids total du produit), Ti₅O₉ (30% poids), Ti₆O₁₁ (20% poids) et Ti₃O₅ (25% poids. Cette demande ne décrit pas un produit poreux en vue des applications de filtration et/ou électrochimiques selon l'invention. US2006/0049060 se rapporte a un procédé de fabrication de Ti métallique a partir de TiO2 (§10 par exemple). Dans §32 et §33 on cite l'utilisation d'une petite quantité de certaines phases de magnéli en mélange avec le TiO2 comme composition de base a réduire, mais simplement comme une aide pour assurer la résistance mécanique durant le procédé.

L'article " Electrochemical impédance spectroscopy study of membrane fouling and electrochemical régénération at a sub-stoichiometric TiO2 reactive electrochemical membrane" publié dans le Journal of Membrane Science, 510-523, (2016) décrit l'utilisation de membrane de Ti₄O₇ et Ti₆O₁₁ présentant une porosité de 28,2% avec une taille médiane de pore de 3,27 µm ainsi qu'une distribution des pores bimodale.

L'article « Development and Characterization of Ultrafiltration TiO2 Magnéli Phase Reactive Electrochemical Membranes" de la publication « Environ Science and Technologie », 50(3), p1428-36 (2016) décrit des produits poreux et en particulier une membrane électrochimique poreuse utilisée pour l'ultrafiltration, dont la porosité est de l'ordre de 30% et le diamètre médian des pores de 2,99 micromètres. Le procédé d'obtention de telles membranes implique plusieurs étapes dont un traitement sous hydrogène à une atmosphère à haute température (1080°C) pour l'obtention desdites phases de Magnéli. Un tel procédé apparait ainsi dangereux à mettre en oeuvre.

Tous ces procédés aboutissent finalement à des membranes poreuses d'oxyde de titane dont une partie de la porosité est de taille nanométrique et donc trop petite pour être utile pour la fonction recherchée de filtration. En outre cette porosité supplémentaire contribue à la fragilisation mécanique de la membrane.

L'analyse précédente montre qu'il existe encore à l'heure actuelle le besoin d'une méthode de préparation sécurisée de tels produits poreux à base de sous-oxydes de titane répondant à une formulation générale TiOₓ, en particulier dans laquelle x est compris entre 1,50 et 1,95 et tout particulièrement dans laquelle x est compris entre 1,75 et 1,85.

Egalement, il existe un besoin de proposer des produits céramiques à base de sous-oxyde(s) de titane présentant une porosité augmentée, c'est-à-dire dont la porosité ouverte utile (c'est-à-dire celle accessible aux composés à dégrader) est supérieure à celle décrite dans les publications précédentes.

L'objet de la présente invention vise à résoudre efficacement de tels problèmes.

Selon un premier aspect, la présente invention se rapporte ainsi à un procédé de fabrication de produits poreux selon les présentes revendications, constitués essentiellement de sous-oxyde(s) de titane de formulation générique TiOx, la valeur de x étant comprise entre 1,6 et 1,9, ledit procédé comprenant les étapes suivantes :
a) mélange des matières premières comprenant au moins une source de dioxyde de titane, un agent réducteur comprenant du carbone et optionnellement un ou plusieurs produit(s) organique(s), par exemple liant, plastifiant, lubrifiant, de préférence en mélange avec un solvant tel que l'eau,
b) mise en forme du produit par exemple par extrusion, pressage, coulage en bande ou granulation,
c) optionnellement, notamment lorsque des produits organiques sont utilisés au cours de l'étape a), traitement thermique sous air ou atmosphère oxydante, à une température suffisante pour permettre l'élimination d'une grande partie du ou des produit(s) organique(s) et inférieure à la température de vaporisation de l'agent réducteur,
d) frittage, par exemple à une température supérieure à 1150°C mais ne dépassant pas 1430°C, sous une atmosphère neutre ou réductrice,

Selon une caractéristique essentielle du procédé selon l'invention, la source de dioxyde de titane est constituée d'au moins 55% de la forme anatase et le mélange initial comprend entre 1,5% et 5,0% poids de carbone, rapporté au poids total de dioxyde de titane.

Selon une autre caractéristique essentielle du procédé selon l'invention, la quantité d'agent réducteur et la température de frittage sont ajustées ensemble de telle manière que le produit poreux final réponde à la formulation générique TiOx, la valeur de x étant comprise entre 1,6 et 1,9, de préférence entre 1,75 et 1,85 et plus particulièrement que le produit poreux final soit constitué essentiellement des phases de type TiₙO₂ₙ₋₁, n étant un nombre entier supérieur ou égal à 4 et inférieur ou égal à 9, en particulier parmi Ti₄O₇, Ti₅O₉, Ti₆O₁₁.

Grâce à une telle triple sélection dans le choix de la source de dioxyde de titane, de la quantité de l'agent réducteur et de la température finale de frittage dans le procédé précédemment décrit, il s'est avéré possible non seulement d'obtenir directement et en toute sécurité un produit poreux et dont la nature des phases présentes est facilement ajustable mais aussi dont les caractéristiques porosimétriques sont améliorées, comme il est démontré dans la suite de la description et en particulier les exemples. Ainsi, par l'ajustement de la source de dioxyde de titane, des paramètres du procédé et notamment de la quantité d'agent réducteur, de la température de frittage, et éventuellement de la température et de la durée du traitement thermique de l'étape c), il devient possible selon l'invention d'obtenir avantageusement un produit dont la composition est ajustable, notamment qui comprend principalement des phases de Magnéli sélectionnées parmi Ti₃O₅, Ti₄O₇, Ti₅O₉, Ti₆O₁₁, Ti₇O₁₃, Ti₈O₁₅, Ti₉O₁₇ ou un mélange comprenant majoritairement au moins deux de ces phases, et dont la porosité est supérieure à celle obtenue par les procédés précédemment décrit, et en particulier supérieure ou égale à 34%, et encore plus avantageusement dont la répartition des pores est essentiellement monomodale.

Selon des modes préférés de réalisation du procédé :
Le mélange initial comprend moins de 40%, voire moins de 35%, voire moins de 30%, voire moins de 20%, voire moins de 10%, de rutile comme source de dioxyde de titane.

Le mélange initial comprend plus de 60% poids d'anatase comme source de dioxyde de titane, et de préférence encore plus 65%, voire plus de 70%, ou même plus de 80%, de préférence encore plus de 90% d'anatase comme source de dioxyde de titane, voire encore ne comprend que l'anatase comme source de dioxyde de titane, hormis les impuretés inévitables.

L'anatase dans le mélange initial se présente de préférence sous la forme d'une poudre dont le diamètre médian est compris entre 0,2 et 0,5 micromètres.

L'agent réducteur comprenant du carbone peut être choisi parmi le carbone black (noir de carbone), les cokes, les charbons actifs, le graphite ou tout autre composé organique comprenant au moins 50% poids de carbone, voire au moins 70% ou même 80% poids de carbone. L'agent réducteur comprenant du carbone peut également comprendre, voire être constitué de carbure de titane (TiC).

L'agent réducteur se présente de préférence sous la forme d'une poudre dont le diamètre médian est compris entre 0,2 et 0,5 micromètres.

Le mélange initial peut avantageusement comprendre entre 1,5 et 5,0% poids de carbone, rapporté au poids de dioxyde de titane. Le carbone provient bien évidemment essentiellement ou en totalité dudit agent réducteur.

De préférence, rapporté au poids de dioxyde de titane, la teneur en carbone du mélange est donc supérieure à 1,5%, voire supérieure à 2,0%, voire supérieure à 2,5%.

De préférence encore, rapporté au poids de dioxyde de titane, la teneur en carbone du mélange est inférieure à 4,5%, voire inférieure à 4,0% en poids.

Selon un mode préféré de réalisation de l'invention, le diamètre médian des grains des poudres du mélange initial avant l'étape de mise en forme est inférieur ou égal à 1 micromètre, voire inférieur à 0,5 micromètres.

De préférence le diamètre médian des grains des poudres du mélange initial avant l'étape de mise en forme est compris entre 0,1 et 1 micromètre et de manière très préférée est compris entre 0,2 et 0,5 micromètres.

Le mélange initial peut comprendre du carbone black en tant qu'agent réducteur et de préférence encore l'agent réducteur est le carbone black.

Le mélange initial comprend entre 1,5 et 5,0% poids de carbone black, rapporté au poids de dioxyde de titane. De préférence, la teneur en carbone black est supérieure à 1,5%, voire supérieure à 2,0%, voire supérieure à 2,5% et/ou inférieure à 4,5%, voire inférieure à 4,0% en poids de carbone black rapporté au poids de dioxyde de titane.

Le dioxyde de titane représente préférentiellement plus de 90% de la masse minérale totale présente dans le mélange initial (hormis le carbone minéral), et de préférence représente la totalité de la masse minérale présente dans le mélange initial.

Sans sortir du cadre de l'invention, le mélange initial peut cependant également comprendre de la matière minérale autre que le dioxyde de titane, par exemple dans une quantité inférieure à 5,0%, voire inférieure à 4,0%, ou même inférieure à 3,0%, voire inférieure à 1,0%, voire inférieure à 0,5% de la masse minérale totale.

Cette matière minérale peut par exemple être de la silice (SiO₂), des oxydes tels que Nb₂O₅ ou Ta₂O₅, V₂O₅, ZrO₂, des oxydes de Ba, Sr, Mn, Cr, Fe, les oxydes d'alcalins ou d'alcalino-terreux du type Ca, Na, K, Li, en particulier les oxydes de potassium ou de sodium.

Cette matière minérale peut par exemple être, dans une quantité inférieure à 1,5%, voire inférieure à 1,0%, ou même inférieure à 0,8%, voire inférieure à 0,5% de la masse minérale totale, les oxydes d'alcalins ou d'alcalino-terreux du type Ca, Na, K, Li ou bien des impuretés (liées notamment aux matières premières utilisées) comme Al₂O₃.

Le procédé peut comprendre une étape additionnelle (avant ou après l'étape a)) de broyage ou désagglométration des matières premières utilisées de telle façon qu'elles présentent un diamètre médian adapté au procédé et à l'application, de préférence inférieur à 1 micromètre, voire inférieur à 0,5 micromètre, voire compris entre 0,2 et 0,5 micromètre.

A l'étape b), la mise en forme est de préférence faite par extrusion, par exemple sous forme de tube ou sous forme de nid d'abeille comme indiqué dans la suite de la description.

En principe, lors d'une telle mis en forme, le mélange de l'étape a) ne comprend pas de produits organiques supplémentaires et dans lequel le frittage est opéré immédiatement après l'étape de mise en forme, sans traitement thermique intermédiaire.

A l'étape b), la mise en forme peut alternativement être faite par compactage. En particulier, la mise en forme peut être réalisée par pressage. Selon une telle mise en forme, le mélange de l'étape a) comprend un ou plusieurs produit(s) organique(s) de préférence en mélange avec un solvant tel que l'eau et dans lequel, au cours d'une étape c), on effectue le traitement thermique sous air ou atmosphère oxydante à une température suffisante pour permettre l'élimination d'une grande partie du ou des produit(s) organique(s) et inférieure à la température de vaporisation de l'agent réducteur.

A l'étape b), la mise en forme peut également consister en une granulation, par exemple à l'aide d'un mélangeur intensif ou d'un atomiseur à suspension ou à lit fluidisé.

A l'étape b), la mise en forme peut également consister en en toute autre technique de mise en forme, par exemple à l'aide d'une suspension, par exemple le coulage en bande ou le dépôt par trempage.

A l'étape optionnelle c), la température est de préférence supérieure à 150°C, voire supérieure à 170°C, voire supérieure à 200°C et/ou inférieure à 480°C, voire inférieure à 450°C, voire inférieure à 430°C.

A l'étape d), la température est supérieure à 1200°C, voire supérieure à 1230°C et/ou inférieure à 1400°C, voire inférieure à 1380°C, voire inférieure à 1360°C.

A l'étape d), l'atmosphère est neutre, par exemple est une atmosphère d'argon ou alternativement l'atmosphère est réductrice, par exemple est une atmosphère sous pression partielle d'hydrogène.

Selon un mode particulier de réalisation de l'invention, le mélange des matières premières comprend, en poids, au moins 90% de dioxyde de titane sous forme anatase, et au moins 3% de carbone black et dans lequel la température de frittage est ajustée entre 1300 et 1450°C, de préférence sous atmosphère neutre.

Par l'application d'un tel procédé, il est apparu possible de fabriquer des produits poreux constitués essentiellement de sous-oxydes de titane et répondant à la formulation moyenne générale TiOₓ, la valeur de x pouvant être facilement adaptée en fonction de la composition du mélange initial, en particulier à des valeurs comprises entre 1,6 et 1,9 et plus particulièrement comprises entre 1,75 et 1,85. Avantageusement, une telle modulation peut être obtenue directement selon l'invention en fonction de l'ajustement combiné du taux de pourcentage de carbone black initialement présent dans le mélange.

En outre comme indiqué précédemment, les produits poreux issus de la mise en oeuvre d'un tel procédé ont montré une porosité sensiblement améliorée par rapport aux produits poreux obtenus par des techniques différentes. En particulier, par application du procédé selon l'invention, il a été possible d'obtenir des produits dont le taux de porosité global est augmenté, et dont la distribution des pores est sensiblement monomodale et la taille des pores centrée sur une taille de l'ordre du micromètre.

De telles propriétés rendent l'utilisation des produits selon l'invention très avantageuse dans de nombreux domaines d'application et en particulier pour le traitement des effluents.

La présente invention se rapporte ainsi également à des produits poreux susceptibles d'être obtenus par un procédé selon l'invention.

Elle se rapporte également à des produits poreux susceptibles d'être obtenus par un procédé selon l'invention et revêtus d'une membrane.

En particulier, la présente invention se rapporte à un produit poreux susceptible d'être obtenu par un procédé selon l'une des revendications précédentes, caractérisé en ce que :
- le matériau constituant ledit produit répond à la formulation générique TiOₓ, la valeur de x étant comprise entre 1,6 et 1,9, de préférence entre 1,75 et 1,85.
- une distribution des diamètres de pore est sensiblement monomodale,
- le diamètre médian d₅₀ des pores est compris entre 0,5 et 5 micromètres, notamment entre 1 et 2,5 micromètres,
- la porosité ouverte est supérieure à 34%.

Les produits poreux selon l'invention comprenant plus de 90% en poids, au total, de sous-oxyde(s) de titane répondant à la formulation générique TiₙO₂ₙ₋₁, n étant un nombre entier supérieur ou égal à 3 et inférieur ou égal à 9.

Toutes les données de porosité décrites dans la présente description sont mesurées par porosimétrie au mercure. Leur porosité ouverte totale, est supérieure ou égale à 34%.

La distribution des pores du ou des sous oxydes de titane constituant le produit selon l'invention est monomodale. Le diamètre médian de pores, également mesuré par porosimétrie au mercure, est compris entre 0,5 et 5 micromètres, de préférence entre 0,8 et 2,5 micromètres.

De préférence les produits poreux comprennent au total plus de 92%, voire plus de 94%, ou encore plus de 95% de sous-oxyde(s) de titane.

Sans sortir du cadre de la présente invention, les produits peuvent cependant comprendre d'autres phases, en particulier la silice (SiO₂), ou bien d'autres éléments, présents essentiellement sous forme oxyde, ou sous forme de composé défini (par exemple KTi₈O₁₆) ou en solution solide avec le ou les sous-oxyde (s) de titane, notamment Al, Cr, Zr, Nb, Ta, Li, Fe, les alcalins ou les alcalino-terreux du type Ca, Sr, Na, K, Ba. Sur la base des oxydes simples correspondants, la quantité sommée totale desdits éléments présents est de préférence inférieure à 10% poids de la masse totale du produit, par exemple inférieure à 5%, voire inférieure à 4%, ou même inférieure à 3% poids de la masse totale du produit. La présence de ces éléments peut notamment être désirée ou être simplement liée aux impuretés présentes dans les matières premières utilisées.

Les produits peuvent en outre comprendre des traces de nitrures (nitrures, oxynitrures ou carbonitrures de titane).

Selon un mode préféré, les produits poreux selon l'invention sont constitués uniquement desdits sous-oxydes de titane, les autres phases n'étant présentes que sous la forme d'impuretés inévitables.

En particulier, lesdits sous-oxydes de titane sont de préférence principalement des phases TiₙO₂ₙ₋₁ dans lesquelles n est compris entre 4 et 6, bornes incluses, c'est-à-dire Ti₄O₇, Ti₅O₉, Ti₆O₁₁ qui présentent les meilleures conductivités électroniques, lesdites phases représentant de préférence, au total, plus de 80%, voire 85% ou même 90% du poids des produits selon l'invention.

Lesdits sous-oxydes de titane comportent de préférence Ti₄O₇ et/ou Ti₅O₉ comme phase principale.

Par « principalement », on entend que les pics de diffraction principaux observés sur un diffractogramme de rayons X correspondent à ces phases de Magnéli.

En particulier, au sens de la présente invention, une phase est considérée comme « principale » si elle représente plus de 25% du poids du produit et de préférence au moins 35%, voire au moins 45% du poids du produit.

Selon un mode particulièrement préféré, lesdites phases principales sont des phases TiₙO₂ₙ₋₁ de formulation générique Ti₄O₇ ou Ti₅O₉ ou Ti₆O₁₁ ou un mélange de ces phases.

En particulier, dans les produits poreux selon un mode avantageux de la présente invention, les phases Ti₄O₇ et/ou Ti₅O₉ et/ou Ti₆O₁₁ représentent, au total, plus de 60% du poids du produit, de préférence plus de 70% du poids du produit, et de manière très préférée plus de 80% du poids du produit, voire même plus de 90% du poids du produit.

Selon une forme particulière d'un produit selon l'invention, le produit poreux selon l'invention est une pièce plane, par exemple de forme rectangulaire ou circulaire, notamment obtenu à l'issue d'une étape b) de compaction, ou de pressage ou de coulage.

Selon une forme particulière d'un produit selon l'invention, le produit poreux selon l'invention est un tube, notamment obtenu à l'issue d'une étape b) d'extrusion. Dans un tel tube, la rétention des composés à traiter et leur dégradation électrochimique peut s'opérer à la surface du tube et/ou au sein de la porosité. Pour réaliser la réaction électrochimique, le tube peut être muni d'une cathode par exemple de forme tubulaire, par exemple située de manière coaxiale, à l'intérieur d'un tube selon l'invention.

Selon une forme particulière d'un produit selon l'invention notamment obtenu à l'issue d'une étape b) d'extrusion, le produit poreux selon l'invention est un nid d'abeille. Par nid d'abeille, on entend classiquement une structure comprenant une pluralité de canaux sensiblement parallèles entre eux et séparés les uns des autres par des parois, notamment des parois poreuses faites de sous-oxyde(s) de titane selon l'invention et de formulation générique TiOx, la valeur de x étant comprise entre 1,6 et 1,9.

Dans un nid d'abeille, la rétention des composés à traiter et leur dégradation électrochimique peut s'opérer à la surface des canaux et/ou au sein de la porosité de chaque canal. La rétention peut être de type « frontale » si les canaux sont alternativement bouchés à l'une de leurs extrémités ou bien de type « tangentielle » si les canaux ne sont pas bouchés. Le nid d'abeille peut être de section rectangulaire, circulaire ou encore ellipsoïdale. Pour réaliser la réaction électrochimique, le nid d'abeille peut être muni d'une cathode pour constituer un module éventuellement associé avec un ou plusieurs autre(s) module(s) pour former un système de plus grande dimension.

Les pourcentages poids respectifs des différentes phases constituant le produit selon l'invention peuvent être déterminés selon les techniques bien connues dans le domaine, en particulier par diffraction des rayons X, par exemple par simple comparaison des rapports d'intensité entre les pics de diffraction des différentes phases présentes ou encore de façon plus précise par analyse Rietveld, selon les techniques bien connues dans le domaine.

Afin de ne pas alourdir inutilement la présente description, toutes les combinaisons possibles selon l'invention entre les différents modes préférés des compositions des produits selon l'invention, tels qu'ils viennent d'être décrits précédemment, ne sont pas reportées. Il est cependant bien entendu que toutes les combinaisons possibles des domaines et valeurs initiaux et/ou préférés précédemment décrits sont envisagées à l'heure du dépôt de la présente demande et doivent être considérées comme décrites par le demandeur dans le cadre de la présente description (notamment de deux, trois combinaisons ou plus).

L'invention et ses avantages seront mieux compris à la lecture des exemples non limitatifs qui suivent. Dans les exemples, tous les pourcentages sont donnés en poids.

### Exemples :

Dans tous les exemples, les échantillons ont été préparés à partir d'un mélange homogène obtenu par mélange en jarre pendant 1 à 2 heures de matières premières minérales constituées d'une poudre de carbone black commercialisé par Cabot Corporation de diamètre médian des grains de l'ordre de 0,2 à 0,3 micromètres (vérifié par des analyses MEB) et d'une poudre de dioxyde de titane commerciale sous forme d'anatase (noté A dans les tableaux) et/ou sous forme rutile (noté R dans les tableaux qui suivent) comportant toutes les deux plus de 96% de TiO₂. Les deux poudres présentent un diamètre médian de l'ordre de 0,2 à 0,5 micromètres.

Les poudres d'oxyde de niobium ou de tantale utilisées pour les exemples 23 et 24 ont une pureté supérieure à 98% et ont été préalablement broyées pour obtenir un diamètre médian des grains de 0,3 micromètre.

La quantité de carbone black (noté carbone dans les tableaux), rapportée à 100 grammes de dioxyde de titane dans le mélange initial, est donnée dans les tableaux.

Les mélanges de réactifs initiaux peuvent être mis en forme par pressage (noté P dans les tableaux), sans ajouts d'autres additifs sous forme de plaque circulaire de diamètre 13 mm et hauteur 7 mm.

Dans d'autres exemples, on utilise les additifs constitués des produits organiques suivants: un plastifiant (Methocel A4M, environ 2,5 pour cent en poids de mélange minéral), un lubrifiant (Putroil, environ 3,0 pour cent en poids de mélange minéral), un dispersant (Darvan C-N, environ 1,5 pour cent en poids de mélange minéral), de l'eau et la mise en forme est alors effectuée par extrusion (noté E dans les tableaux) sous forme de tube de diamètre interne de l'ordre de 6,2 mm et d'épaisseur d'environ 4 mm et de longueur de l'ordre de 162 mm après frittage.

Dans un autre exemple, la mise en forme est effectuée par granulation (noté G dans les tableaux) : les réactifs initiaux sont mélangés dans un broyeur à boulets pendant 5 heures puis passage dans un granulateur en contre-courant pendant 4 minutes avec ajout progressif d'une solution de PVA (environ 15 pour cent en poids de mélange minéral) au début de l'opération.

Lorsque des additifs organiques sont utilisés, les échantillons sont portés sous air, pendant 30 minutes (sauf mention contraire dans les tableaux), à la température T₁ indiquée dans les tableaux pour éliminer une grande partie desdits produits organiques et, le cas échéant, des composés volatils de l'agent réducteur par un chauffage intermédiaire. Enfin ils sont frittés sous flux d'argon, dans un four Nabertherm RHTC 80-710/15 avec tube constitué à 99,7% d'alumine, pendant 2 heures à la température T₂ indiquée dans les tableaux.

Les protocoles expérimentaux utilisés pour la caractérisation de la composition et des propriétés des différents échantillons obtenus sont les suivants :
1°) Les phases cristallines présentes dans les produits réfractaires ont été caractérisées par diffraction des rayons X. Les résultats obtenus sont regroupés dans les tableaux. Dans ces tableaux, PP indique la ou les phase(s) principale(s), PM indique la ou les phase(s) minoritaire(s). On considère au sens de la présente invention qu'une phase est « principale » quand elle représente au moins 25% du poids total du produit. On considère qu'une phase est « minoritaire » lorsqu'elle représente plus de 5% et moins de 25% du poids du produit, en particulier plus de 5% et moins de 20% du poids du produit et de préférence plus de 5% et moins de 15% du poids du produit, étant entendu que la quantité sommée du poids des phases minoritaires est normalement inférieure à 50% et de préférence est inférieure à 30%, voire inférieure à 20%, du poids du produit.
2°) Les porosités et le diamètre médian sont déterminés de manière connue par porosimétrie au mercure. Le volume de pores est mesuré par intrusion de mercure à 2000 bars à l'aide d'un porosimètre à mercure Autopore IV série 9520 Micromeritics, sur un échantillon de 1cm³. La norme applicable est l'ISO15901-1 : 2016 part 1. L'augmentation de pression jusqu'à haute pression conduit à « pousser » le mercure dans des pores de taille de plus en plus petite. Le diamètre médian (noté D₅₀ dans les tableaux) de pores correspond à un seuil de 50% de la population en volume. «Mono» dans les tableaux signifie que la distribution de pores est monomodale et centrée sur le D50 également reporté.
3°) Le carbone résiduel est déterminé par absorption infrarouge grâce à un analyseur Horiba dans lequel l'échantillon, sous forme de poudre, subit une combustion dans un flux d'oxygène haute pureté.
4°) L'équipement utilisé pour mesurer le diamètre médian des grains d'oxyde de titane incorporés dans le mélange initial est un granulomètre modèle LA-950V2 de la société HORIBA, avec un indice de réfraction de 2,61.

**Tableau 1**

| Exemple | | 1* | 2 | 3 | 4 | 5 | 6 | 7 | 8* | 9* |
|---|---|---|---|---|---|---|---|---|---|---|
| TiO₂ | | A | A | A | A | A | A | A | R | R |
| Carbone (g) | | 1,0 | 2,0 | 2,5 | 3,0 | 3,7 | 3,7 | 3,4 | 3,4 | 4,0 |
| Mise en forme | | P | P | P | P | P | P | P | P | P |
| T1 (°C) | | - | - | - | - | - | - | - | - | - |
| T2 (°C) | | 1450 | 1300 | 1300 | 1300 | 1300 | 1400 | 1400 | 1400 | 1450 |
| Phases | PP | | Ti₈O₁₅ | Ti₆O₁₁ | Ti₅O₉ | Ti₅O₉ | Ti₅O₉ | Ti₅O₉ | | |
| | | | | | | Ti₄O₇ | Ti₄O₇ | Ti₄O₇ | | |
| | PM | | Ti₉O₁₇ | Ti₇O₁₃ | Ti₆O₁₁ | | | | | |
| | | | Ti₇O₁₃ | | | | | | | |
| Porosité (%) | | 14 | 35 | 38 | 38 | 38 | 34 | 34 | 10 | 13 |
| D₅₀ (pm) | | | | | | 1,8 | 1,8 | 1,8 | | |
| Distribution diamètres des pores | | | | | | Mono | Mono | Mono | | |

| | | | | | | | | | | |
|---|---|---|---|---|---|---|---|---|---|---|
| *comparatif | | | | | | | | | | |

Les exemples 1, 8 et 9 du tableau 1 sont des exemples comparatifs :
- Selon l'exemple 1, le taux de carbone est insuffisant pour obtenir les phases de Magnéli recherchées.
- Selon les exemples 8 et 9, la source de dioxyde de titane est une poudre de rutile.

**Tableau 2**

| Exemple | | 10 | 11 | 12 | 13 | 14* | 15* |
|---|---|---|---|---|---|---|---|
| TiO₂ | | A | A | A | A | A | A |
| Carbone (g) | | 3,4 | 3,4 | 3,4 | 3,4 | 3,4 | 3, 4 |
| Mise en forme | | E | E | E | E | E | E |
| T1 (°C) | | 350 | 350 | 350 | 350 (2h) | 350 | 500 |
| T2 (°C) | | 1300 | 1350 | 1400 | 1400 | 1450 | 1350 |
| Phases | PP | Ti₅O₉ | Ti₅O₉ | Ti₅O₉ | Ti₅O₉ | Ti₅O₉ | TiO₂ |
| | | Ti₄O₇ | Ti₄O₇ | Ti₄O₇ | Ti₄O₇ | Ti₄O₇ | |
| | PM | | | | | Ti₃O₅ | |
| | | | | | | Ti₆O₁₁ | |
| Porosité (%) | | 42 | 39 | 34 | 36 | 29 | 10 |
| D50 (pm) | | 1, 7 | 1,8 | 1, 8 | 1,9 | 2, 2 | |
| Distribution diamètre des pores | | Mono | Mono | Mono | Mono | Mono | |

| | | | | | | | |
|---|---|---|---|---|---|---|---|
| *comparatif | | | | | | | |

Les exemples 14 et 15 sont des exemples comparatifs :
- Selon l'exemple 14, le traitement thermique de frittage est effectué à une température trop élevée.
- Selon l'exemple 15, le traitement thermique pour l'élimination des composés organiques est effectué à une température trop élevée, entraînant l'élimination d'une partie de l'agent réducteur.

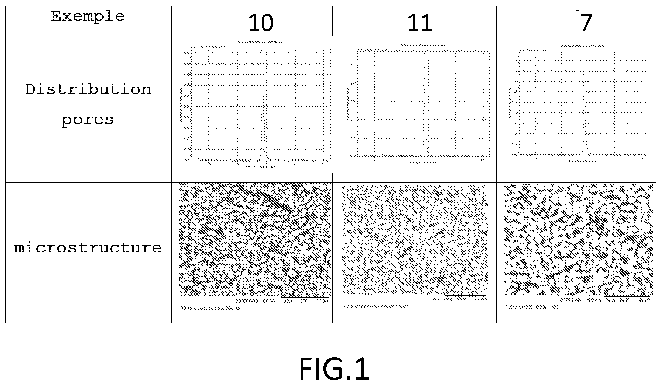

Les courbes obtenues pour la distribution des diamètres de pores des produits ainsi que des clichés de microscopie électronique selon les exemples 7, 10 et 11 selon l'invention sont reportées dans la figure 1 ci-jointe. On observe une répartition monomodale du diamètre des pores centrée sur une valeur du diamètre des pores de l'ordre du micromètre.

**Tableau 3**

| Exemple | 16 | 17 | 18 | 19* |
|---|---|---|---|---|
| TiO₂ | A (70%)+ R (30%) | A (60%)+ R (40%) | A (60%)+ R (40%) | A (50%)+ R (50%) |
| Carbone (g) | 3,4 | 3,4 | 3,4 | 3, 4 |
| Mise en forme | P | P | P | P |
| T1 (°C) | - | - | - | - |
| T2 (°C) | 1200 | 1200 | 1300 | 1300 |
| Porosité (%) | 40 | 38 | 34 | 28 |

| | | | | |
|---|---|---|---|---|
| *comparatif | | | | |

L'exemple 19 est un exemple comparatif : la proportion de rutile est trop importante.

**Tableau 4**

| Exemple | | 20* | 21 | 22 |
|---|---|---|---|---|
| TiO₂ | | A | A | A |
| Carbone (g) | | 3,4 | 3,4 | 3, 4 |
| Mise en forme | | P | P | P |
| T₁ (°C) | | - | - | - |
| T2 (°C) | | 1100 | 1200 | 1300 |
| Phases | PP | ND | Ti₆O₁₁ | Ti₆O₁₁ |
| | | | | Ti₅O₉ |
| | PM | | Ti₇O₁₃ | Ti₄O₇ |
| | | | Ti₅O₉ | |
| | | | Ti₄O₇ | Ti₃O₅ |
| | | | Ti₃O₅ | |
| C résiduel (%) | | 1,4 | 0,6 | 0,3 |

| | | | | |
|---|---|---|---|---|
| *comparatif | | | | |

L'exemple 20 est un exemple comparatif : la température de frittage est trop basse ce qui entraîne la présence de carbone résiduel qui pourrait être néfaste pour les réactions électrochimiques.

Dans les exemples 23 à 24 qui suivent (tableau 5), on a ajouté au TiO₂ sous forme anatase une faible proportion d'un oxyde Nb₂O5 ou Ta₂O₅. Dans les deux cas on remarque une augmentation sensible de la porosité finale par comparaison avec les exemples 4 et 5 notamment.

**Tableau 5**

| Exemple | | 23 | 24 | 25 | 26 |
|---|---|---|---|---|---|
| TiO₂ | | A | A | A | A |
| Oxyde | | Nb₂O₅ | Ta₂O₅ | | |
| | | 2,2 % | 1,3% | | |
| Carbone (g) | | 3,4 | 3,4 | 3,7 | 3, 7 |
| Mise en forme | | P | P | E | G |
| T1 (°C) | | | | 350 (2h) | 110 (60h) |
| T2 (°C) | | 1300 | 1300 | 1300 | 1300 |
| Phases | PP | Ti₅O₉ | Ti₅O₉ | Ti₄O₇ | Ti₄O₇ |
| | | Ti₄O₇ | Ti₄O₇ | Ti₅O₉ | |
| | PM | | | | Ti₅O₉ |
| | | | | | Ti₃O₅ |
| Porosité (%) | | 54 | 54 | 43 | |
| D₅₀ (µm) | | 1,4 | 1,8 | 1,7 | 1,3 |
| Distribution diamètre des pores | | Mono | Mono | Mono | Mono |

L'analyse des diffractogrammes de rayons X par analyse Rietveld montre que le produit issu de l'exemple 25 comprend 80% poids de Ti₄O₇ et 20% poids de Ti₅O₉.

L'analyse des données reportées dans les tableaux montre que :
- Il est nécessaire d'utiliser comme source de dioxyde de titane la forme anatase de celui-ci, au moins pour une partie supérieure à 55% en poids, l'utilisation d'une phase rutile ne permettant pas d'atteindre les porosités souhaitées du matériau constituant le produit selon l'invention;
- la quantité d'agent réducteur nécessaire doit être ajustée pour obtenir les phases de Magnéli souhaitées;
- en présence de produits organiques, le traitement thermique sous air ou atmosphère oxydante doit avoir lieu à une température inférieure à la température de vaporisation de l'agent réducteur de l'oxyde de titane, par exemple inférieure à 450°C lorsque l'agent réducteur est du carbone black ;

- les produits obtenus selon un procédé selon l'invention présentent une porosité supérieure ou égale à 34%,
- la distribution des pores est monomodale et de l'ordre du micromètre.

De telles caractéristiques porosimétriques conduisent ensemble à un meilleur traitement des liquides et une plus grande efficacité de la filtration, puisque le produit selon l'invention se caractérise ainsi par un plus grand nombre de pores, tous ayant une taille médiane de l'ordre du micromètre, pour un même volume poreux et/ou volume poreux augmenté, ainsi qu'une limitation de la perte de charge. Alternativement, de telles propriétés conduisent à une sélectivité accrue dans la rétention et l'élimination facilitée des espèces polluantes de petite taille, de l'ordre du micromètre.

## Revendications

1. Produit poreux **caractérisé en ce que** :
- le matériau constituant ledit produit répond à la formulation générique TiOₓ, la valeur de x étant comprise entre 1,6 et 1,9, de préférence entre 1,75 et 1,85.
- une distribution des diamètres de pore est sensiblement monomodale,
- le diamètre médian d₅₀ des pores est compris entre 0,5 et 5 micromètres,
- la porosité ouverte est supérieure à 34%.

2. Produit poreux selon la revendication précédente, comprenant plus de 90% en poids, au total, des phases de Magnéli sélectionnées parmi Ti₄O₇, Ti₅O₉, Ti₆O₁₁ ou d'un mélange d'au moins deux de ces phases.

3. Produit poreux selon l'une des revendications 1 ou 2, dans lequel le diamètre médian d₅₀ des pores est compris entre 1 et 2,5 micromètres.

4. Produit poreux selon l'une des revendications 1 à 3 comprenant en outre la matière minérale autre que le dioxyde de titane, dans une quantité inférieure à 5,0% de la masse minérale totale, ladite matière minérale supplémentaire étant choisie parmi la silice SiO₂, les oxydes Nb₂O₅ ou Ta₂O₅, V₂O₅, ZrO₂ ou les oxydes de Ba, Sr, Mn, Cr, Fe, les oxydes d'alcalins ou d'alcalino-terreux

5. Procédé de fabrication de produits poreux selon l'une des revendications précédentes constitués essentiellement de sous-oxyde(s) de titane de formulation générique TiOₓ, la valeur de x étant comprise entre 1,6 et 1,9, ledit procédé comprenant les étapes suivantes :
a) mélange des matières premières comprenant au moins une source de dioxyde de titane, un agent réducteur comprenant du carbone et optionnellement un ou plusieurs produit(s) organique(s) de préférence en mélange avec un solvant tel que l'eau,
b) mise en forme du produit,
c) optionnellement, notamment lorsque des produits organiques sont utilisés au cours de l'étape a), traitement thermique sous air ou atmosphère oxydante à une température suffisante pour permettre l'élimination d'une grande partie du ou des produit(s) organique(s) et inférieure à la température de vaporisation de l'agent réducteur,
d) frittage, par exemple à une température supérieure à 1200°C mais ne dépassant pas 1430°C, sous une atmosphère neutre ou réductrice,
dans lequel la source de dioxyde de titane est constituée d'au moins 55% poids d'anatase,
et dans lequel le mélange initial comprend entre 1,5% et 5,0% poids de carbone, rapporté au poids total de dioxyde de titane.

6. Procédé de fabrication selon la revendication 5 dans lequel la quantité d'agent réducteur est ajustée de telle manière que le produit poreux réponde à la formulation générique TiOx, la valeur de x étant comprise entre 1,75 et 1,85.

7. Procédé selon l'une des revendications 5 ou 6 dans lequel le mélange initial comprend plus de 90% poids d'anatase et de préférence uniquement la forme anatase comme source de dioxyde de titane.

8. Procédé selon l'une des revendications 5 à 7, dans lequel l'agent réducteur comprenant du carbone est choisi parmi le carbone black, les cokes ou tout autre composé organique comprenant au moins 50% poids de carbone, voire au moins 70% ou même 80% poids de carbone.

9. Procédé selon l'une des revendications 5 à 8, dans lequel l'agent réducteur est le carbone black.

10. Procédé selon l'une des revendications 5 à 9, dans lequel le mélange initial comprend plus de 2,0% et moins de 4,5 poids de carbone, rapporté au poids total de dioxyde de titane.

11. Procédé selon l'une des revendications 5 à 10, dans lequel l'étape d) est effectuée sous atmosphère neutre.

12. Procédé selon l'une des revendications 5 à 11, dans lequel l'étape d) est effectuée sous atmosphère réductrice.

13. Procédé selon l'une des revendications 5 à 12, dans lequel le mélange des matières premières comprend, en poids, au moins 90% de dioxyde de titane sous forme anatase, et au moins 3% de carbone black et dans lequel la température de frittage est ajustée entre 1300 et 1450°C, de préférence sous atmosphère neutre.

14. Procédé selon l'une des revendications 5 à 13, dans lequel le produit poreux est constitué essentiellement des phases de Magnéli sélectionnées parmi Ti₄O₇ et/ou Ti₅O₉.

15. Procédé selon l'une des revendications 5 à 14, dans lequel le mélange initial des matières premières comprend de la matière minérale autre que le dioxyde de titane, dans une quantité inférieure à 5,0% de la masse minérale totale.

16. Procédé selon l'une des revendications 5 à 15, dans lequel le mélange initial des matières premières comprend de la matière minérale autre que le dioxyde de titane, ladite matière minérale étant choisie dans le groupe constitué par la silice SiO₂, les oxydes Nb₂O₅ ou Ta₂O₅, V₂O₅, ZrO₂ ou les oxydes de Ba, Sr, Mn, Cr, Fe, les oxydes d'alcalins ou d'alcalino-terreux.

## Patentansprüche

1. Poröses Erzeugnis, **dadurch gekennzeichnet, dass**:
- das Material, das das Erzeugnis bildet, der generischen Formulierung TiOₓ entspricht, wobei der Wert von x zwischen 1,6 und 1,9, vorzugsweise zwischen 1,75 und 1,85, beträgt.
- eine Porendurchmesserverteilung im Wesentlichen monomodal ist,
- der mittlere Porendurchmesser d₅₀ zwischen 0,5 und 5 Mikrometer beträgt,
- die offene Porosität größer als 34 % ist.

2. Poröses Erzeugnis nach dem vorstehenden Anspruch, umfassend insgesamt zu mehr als 90 Gew.- % Magnéli-Phasen, die aus Ti₄O₇, Ti₅O₉, Ti₆O₁₁ oder einer Mischung von mindestens zwei dieser Phasen ausgewählt sind.

3. Poröses Erzeugnis nach einem der Ansprüche 1 oder 2, wobei der mittlere Porendurchmesser d₅₀ zwischen 1 und 2,5 Mikrometer beträgt.

4. Poröses Erzeugnis nach einem der Ansprüche 1 bis 3, ferner umfassend das Mineralmaterial, außer Titandioxid, in einer Menge von weniger als 5,0 % der gesamten Mineralmasse, wobei das zusätzliche Mineralmaterial aus Siliciumdioxid SiO₂, Oxiden Nb₂O₅ oder Ta₂O₅, V₂O₅, ZrO₂ oder Oxiden von Ba, Sr, Mn, Cr, Fe, Alkali- oder Erdalkalimetalloxiden ausgewählt ist

5. Verfahren zum Herstellen von porösen Erzeugnissen nach einem der vorstehenden Ansprüche, die im Wesentlichen aus Titansuboxid(en) der generischen Formulierung TiOₓ gebildet sind, wobei der Wert von x zwischen 1,6 und 1,9 beträgt, das Verfahren umfassend die folgenden Schritte:
a) Mischen von Rohmaterialien, umfassend mindestens eine Titandioxidquelle, ein Reduktionsmittel, umfassend Kohlenstoff, und wahlweise ein oder mehrere organische(s) Erzeugnis(se), vorzugsweise in einer Mischung mit einem Lösungsmittel, wie Wasser,
b) Formen des Erzeugnisses,
c) wahlweise, insbesondere wenn organische Erzeugnisse in Schritt a) verwendet werden, Wärmebehandeln unter Luft oder oxidierender Atmosphäre bei einer Temperatur, die ausreicht, um das Entfernen eines großen Teils des oder der organischen Erzeugnisse(s) zu ermöglichen, und niedriger als die Verdampfungstemperatur des Reduktionsmittels ist,
d) Sintern, zum Beispiel bei einer Temperatur höher als 1200 °C, die aber 1430 °C nicht überschreitet, unter einer neutralen oder reduzierenden Atmosphäre,
wobei die Titandioxidquelle mindestens zu 55 Gew.-% aus Anatas gebildet ist,
und wobei die anfängliche Mischung zu zwischen 1,5 Gew.-% und 5,0 Gew.-% Kohlenstoff umfasst, bezogen auf das Gesamtgewicht des Titandioxids.

6. Herstellungsverfahren nach Anspruch 5, wobei die Menge des Reduktionsmittels so eingestellt ist, dass das poröse Erzeugnis der generischen Formulierung TiOx entspricht, wobei der Wert von x zwischen 1,75 und 1,85 beträgt.

7. Verfahren nach einem der Ansprüche 5 oder 6, wobei die anfängliche Mischung zu mehr als 90 Gew.-% Anatas und vorzugsweise allein die Anatasform als Titandioxidquelle umfasst.

8. Verfahren nach einem der Ansprüche 5 bis 7, wobei das Kohlenstoff umfassende Reduktionsmittel aus Carbon Black, Koksen oder einer sonstigen organischen Verbindung, umfassend zu mindestens 50 Gew.-% Kohlenstoff, sogar zu mindestens 70 Gew.-% oder sogar zu 80 Gew.-% Kohlenstoff, ausgewählt ist.

9. Verfahren nach einem der Ansprüche 5 bis 8, wobei das Reduktionsmittel Carbon Black ist.

10. Verfahren nach einem der Ansprüche 5 bis 9, wobei die anfängliche Mischung zu mehr als 2,0 Gew.-% und zu weniger als 4,5 Gew.-% Kohlenstoff umfasst, bezogen auf das Gesamtgewicht des Titandioxids.

11. Verfahren nach einem der Ansprüche 5 bis 10, wobei Schritt d) unter neutraler Atmosphäre durchgeführt wird.

12. Verfahren nach einem der Ansprüche 5 bis 11, wobei Schritt d) unter reduzierender Atmosphäre durchgeführt wird.

13. Verfahren nach einem der Ansprüche 5 bis 12, wobei die Mischung der Rohmaterialien zu mindestens 90 Gew.-% Titandioxid in Anatasform und zu mindestens 3 Gew.-% Carbon Black umfasst und wobei die Sintertemperatur zwischen 1300 und 1450 °C, vorzugsweise unter neutraler Atmosphäre, eingestellt wird.

14. Verfahren nach einem der Ansprüche 5 bis 13, wobei das poröse Erzeugnis im Wesentlichen aus Magnéli-Phasen, die aus Ti₄O₇ und/oder Ti₅O₉ ausgewählt sind, gebildet ist.

15. Verfahren nach einem der Ansprüche 5 bis 14, wobei die anfängliche Mischung der Rohmaterialien das Mineralmaterial, außer Titandioxid, in einer Menge von weniger als 5,0 % der gesamten Mineralmasse umfasst.

16. Verfahren nach einem der Ansprüche 5 bis 15, wobei die anfängliche Mischung der Rohmaterialien das Mineralmaterial, außer Titandioxid, umfasst, wobei das Mineralmaterial aus der Gruppe ausgewählt ist, die aus Siliciumdioxid SiO₂, den Oxiden Nb₂O₅ oder Ta₂O₅, V₂O₅, ZrO₂ oder den Oxiden von Ba, Sr, Mn, Cr, Fe, Alkali- oder Erdalkalimetalloxiden gebildet ist.

## Claims

1. A porous product, **characterized in that**:
- the material making up said product corresponds to the general formula TiOₓ, the value of x being between 1.6 and 1.9, preferably between 1.75 and 1.85.
- the distribution of pore diameters is approximately monomodal,
- the median diameter d₅₀ of the pores is between 0.5 and 5 micrometers,
- the open porosity is above 34%.

2. The porous product as claimed in the preceding claim, comprising more than 90 wt%, in total, of Magnéli phases selected from Ti₄O₇, Ti₅O₉, Ti₆O₁₁ or a mixture of at least two of these phases.

3. The porous product as claimed in one of claims 13 or 14, in which the median diameter d₅₀ of the pores is between 1 and 2.5 micrometers.

4. The porous product as claimed in one of claims 13 to 15, further comprising the mineral material other than titanium dioxide, in an amount below 5.0% of the total mineral mass, said additional mineral material being selected from silica SiO₂, the oxides Nb₂O₅ or Ta₂O₅, V₂O₅, ZrO₂ or the oxides of Ba, Sr, Mn, Cr, Fe, the oxides of alkali metals or of alkaline-earth metals.

5. A method of manufacturing porous products consisting essentially of titanium suboxide(s) of general formula TiOₓ, the value of x being between 1.6 and 1.9, said method comprising the following steps:
a) mixing the raw materials comprising at least one source of titanium dioxide, a reducing agent comprising carbon and optionally one or more organic product(s) preferably mixed with a solvent such as water,
b) forming the product,
c) optionally, in particular when organic products are used during step a), thermal treatment under air or an oxidizing atmosphere at a temperature sufficient to allow removal of a high proportion of the organic product or products and below the evaporation temperature of the reducing agent,
d) sintering, for example at a temperature above 1200°C but not exceeding 1430°C, under a neutral or reducing atmosphere,
in which the source of titanium dioxide consists of at least 55 wt% of anatase and
in which the initial mixture comprises between 1.5 and 5.0 wt% of carbon, relative to the total weight of titanium dioxide.

6. The method of manufacture as claimed in claim 5, in which the amount of reducing agent is adjusted in such a way that the porous product corresponds to the general formula TiOx, the value of x being between 1.6 and 1.9, preferably between 1.75 and 1.85.

7. The method as claimed in one of the claims 5 or 6, in which the initial mixture comprises more than 90 wt% of anatase and preferably only the anatase form as the source of titanium dioxide.

8. The method as claimed in one of the claims 5 to 7, in which the reducing agent comprising carbon is selected from carbon black, cokes or any other organic compound comprising at least 50 wt% of carbon, or at least 70 wt% or even 80 wt% of carbon.

9. The method as claimed in one of the claims, in which the reducing agent is carbon black.

10. The method as claimed in one of the preceding claims, in which the initial mixture comprises between 2.0% and 4.5 wt% of carbon, relative to the total weight of titanium dioxide.

11. The method as claimed in one of the claims 5 to 10, in which step d) is performed under a neutral atmosphere.

12. The method as claimed in one of the claims 5 to 11, in which step d) is performed under a reducing atmosphere.

13. The method as claimed in one of the claims 5 to 12, in which the mixture of raw materials comprises, by weight, at least 90% of titanium dioxide in the anatase form, and at least 3% of carbon black, and in which the sintering temperature is adjusted between 1300 and 1450°C, preferably under a neutral atmosphere.

14. The method as claimed in one of the claims 5 to 13, in which the porous product consists essentially of Magnéli phases selected from Ti₄O₇ and/or Ti₅O₉.

15. The method as claimed in one of the claims 5 to 14, in which the initial mixture of raw materials comprises mineral material other than titanium dioxide, in an amount below 5.0% of the total mineral mass.

16. The method as claimed in one of the claims 5 to 15, in which the initial mixture of raw materials comprises mineral material other than titanium dioxide, said mineral material being selected from the group consisting of silica SiO₂, the oxides Nb₂O₅ or Ta₂O₅, V₂O₅, ZrO₂ or the oxides of Ba, Sr, Mn, Cr, Fe, the oxides of alkali metals or of alkaline-earth metals.
